## Europäisches Patentamt
## European Patent Office
## Office européen des brevets

(19)

(11) Numéro de publication: **0 060 778**
**B1**

(12)

# FASCICULE DE BREVET EUROPEEN

(45) Date de publication du fascicule du brevet:
**21.11.84**

(51) Int. Cl.³: **G 21 C 7/10**

(21) Numéro de dépôt: **82400435.2**

(22) Date de dépôt: **11.03.82**

(54) **Réacteur nucléaire à dispositif de guidage de grappes de contrôle.**

(30) Priorité: **13.03.81 FR 8105037**

(43) Date de publication de la demande:
**22.09.82 Bulletin 82/38**

(45) Mention de la délivrance du brevet:
**21.11.84 Bulletin 84/47**

(84) Etats contractants désignés:
**AT BE CH DE FR GB IT LI SE**

(56) Documents cités:
**DE - A - 2 443 971**
**FR - A - 2 098 240**
**FR - A - 2 202 339**
**FR - A - 2 254 859**
**FR - A - 2 264 368**
**FR - A - 2 397 043**
**FR - A - 2 399 715**
**US - A - 3 361 639**
**US - A - 4 035 230**

(73) Titulaire: **FRAMATOME ET CIE., Tour Fiat 1, Place de la Coupole, F-92400 Courbevoie (FR)**

(72) Inventeur: **Verdeau, Jean-Jacques, 40 allée de la Gambauderie, F-91190 Gif-sur-Yvette (FR)**
Inventeur: **Le Helloco, Michel, 26 avenue Raymond Poincaré, F-75116 Paris (FR)**

(74) Mandataire: **Dupuy, Louis et al, CREUSOT-LOIRE 15 rue Pasquier, F-75383 Paris Cedex 8 (FR)**

BUNDESDRUCKEREI BERLIN

## Description

L'invention concerne la réalisation du guidage des grappes de contrôle dans un réacteur nucléaire lorsque la conception du réacteur dans son ensemble est telle que le réglage de la réactivité s'effectue par déplacement de grappes de contrôle constituées chacune de plusieurs crayons absorbants commandés par une même tige commune et mobiles dans des tubes assurant l'ossature des éléments combustibles formant le cœur du réacteur. Cette disposition se rencontre en particulier dans les réacteurs à eau légère dans lesquels les éléments combustibles sont eux-mêmes des assemblages formés d'un grand nombre de crayons parallèles entre eux, de faible diamètre, supportés latéralement par des grilles liées à des tubes assurant l'ossature de l'élément combustible et permettant d'introduire les crayons absorbants, par déplacement de la grappe de contrôle. Pour clarifier le vocabulaire qui sera utilisé par la suite, il convient de rappeler en outre que dans ce genre de réacteur, on appelle »araignée« la pièce qui à l'extrémité supérieure de la grappe de contrôle, toujours extérieure à l'assemblage combustible correspondant, réunit les différents crayons absorbants, par des bras radiaux, à la tige de commande commune.

Le fronctionnement des grappes de contrôle implique que les crayons absorbants puissent être sortis entièrement à l'extérieur du cœur, alors qu'ils sont très longs, d'une longueur sensiblement égale à celle des assemblages combustibles, et sans autre liaison entre eux qu'à leur extrémité supérieure où se trouve l'araignée. C'est ce qui rend indispensable le guidage des grappes, et même de chaque crayon absorbant individuellement, sur toute la longueur de leur déplacement au-dessus du cœur.

Pour assurer ce guidage, on utilise de manière classique des boîtiers tubulaires, aussi appelés »tubes de guidage«, qui sont d'une longueur suffisante pour couvrir toute la longueur depuis une plaque de cœur définissant la limite supérieure du cœur, que seuls les crayons absorbants de la grappe de contrôle traversent pour pénétrer dans les assemblages combustibles, jusqu'à une plaque support supérieure qui porte le poids des tubes de guidage.

Faisant ainsi partie de ce que l'on appelle les équipements internes supérieurs du réacteur, les boîtiers de guidage se trouvent soumis au fluide de refroidissement primaire qui sort verticalement des assemblages combustibles à l'extrémité supérieure du cœur pour se diriger ensuite vers les sorties latérales par où il quitte la cuve qui contient le cœur. Ils sont donc situés dans une zone de grande turbulence. De ce fait, non seulement les boîtiers doivent assurer un guidage efficace des crayons absorbants de façon que ces derniers puissent être introduits, lors d'un arrêt d'urgance par exemple, le plus rapidement possible entre les crayons combustibles, mais en outre ils doivent satisfaire à des exigences sévères de résistance mécanique. Ils doivent en particulier être résistants en torsion et en flexion; en effet, ils doivent résister aux forces radiales et vibratoires importantes qui résultent de la turbulence du fluide de refroidissement primaire, ainsi d'ailleurs qu'à d'éventuelles forces dues à des secousses sismiques. Ils doivent aussi pouvoir résister à des variations brusques de pression sans déformation, notamment en cas de rupture d'une tuyauterie du circuit primaire. De plus, ils participent à l'évacuation et à la déviation du fluide primaire qui pénètre à l'intérieur par les orifices de passage des crayons absorbants de la grappe de contrôle, et ils doivent le faire en occosionnant le moins de perte de charge possible.

En fonction de ces impératifs, on a déjà proposé de renforcer le guidage individuel des crayons absorbants près de l'extrémité inférieure des bîtiers. Dans une réalisation connue, décrite notamment dans le brevet français FR-A-2 397 043, on utilise à cette fin un dispositif de guidage comprenant, en plus des boîtiers eux-mêmes et à l'intérieur de chacun d'eux, des entretoises horizontales régulièrement réparties sur la hauteur du boîtier, avec en outre, dans la zone inférieure du boîtier, un ensemble de tubes verticaux fendus et de plaques verticales orientées radialement qui réunit entre elles des entretoises horizontales de manière à assurer un guidage longitudinal qui soit continu dans cette zone, mais tout en laissant librement passer les crayons absorbants et même l'araignée. Les fentes longitudinales qui permettent le passage de l'araignée affaiblissent considérablement la résistance mécanique des tubes. En outre, leur performance est limitée par l'existence d'un gradient de pression dans un plan horizontal qui, du fait que les tubes sont ouverts, tend à appliquer le crayon absorbant contre la paroi du tube, provoquant ainsi une usure par frottement. Pour limiter ce phénomène, il est prévu, sur les plaques radiales disposées entre les tubes, des ouvertures d'évacuation du fluide.

Selon une autre solution (brevet français FR-A-2 202 339), la plaque supérieure du cœur est doublée d'une plaque intermédiaire située à un niveau supérieur à la région de plus forte turbulence du fluide primaire, en pratique au-dessus du plan des tubulures de la cuve contenant le cœur, qui assurent l'entrée et la sortie du fluide de refroidissement. La plaque intermédiaire n'est pas traversée par les boîtiers, mais seulement par des tubes qui assurent le guidage individuel des crayons absorbants en même temps qu'ils jouent le rôle d'entretoises maintenant les deux plaques (la plaque de cœur et la plaque intermédiaire) solidaires entre elles. Dans ce cas, les boîtiers eux-mêmes restent donc en dehors de la zone de plus forte turbulence, de même que la partie araignéetige de commande des barres de contrôle. Cependant, cette solution n'est guère possible que lorsqu'on peut utiliser des tubes de diamètre relativement important, capables de présenter la résistance mécanique indispensable pour leur rôle d'entretoises. Elle ne s'applique donc pas au guidage de barres de contrôle à crayons absorbants de faible diamètre. Cet inconvénient n'est pas complètement évité dans une variante de cette solution, décrite dans la demande de brevet français, publiée FR-A-2 254 859, où la plaque intermédiaire est abaissée et munie d'orifices de passage du fluide de refroidissement, de sorte que la circulation reste sensiblement ascendante à ce niveau. De plus dans cette demande, le guidage des crayons absorbants entre la plaque intermédiaire et la plaque inférieure est réalisée par des tubes courts qui, en même temps, doivent assurer la liaison mécanique entre ces deux plaques, ce qui oblige à prévoir des tubes d'une épaisseur suffisante pour assurer cette liaison.

Pour pallier les inconvenients des divers dispositifs de guidage connus rappelés ci-dessus, l'invention propose un nouveau dispositif qui a sur eux comme avantage de permettre de combiner notamment une grande robustesse, une moindre participation à l'usure des crayons absorbants et une fabrication moins onéreuse.

L'invention a ainsi pour objet un réacteur nucléaire comportant des grappes de contrôle de la réactivité, chacune formée d'une pluralité de crayons absorbants mobiles verticalement à travers une plaque de cœur constituant la limite supérieure du cœur du réacteur et reliés ensemble par une araignée à bras radiaux à une tige axiale de commande commune, et des moyens de guidage des grappes de contrôle dans leurs déplacements, hors du cœur, lesdits moyens comportant des boîtiers de guidage respectivement associés aux différentes grappes de contrôle, et à l'intérieur de chaque boîtier, des plaques assurant un guidage discontinu à des niveaux intermédiaires pour les crayons individuels et l'araignée, chaque boîtier étant associé à des tubes de guidage continu des crayons individuels, caractérisé en ce que les tubes relient deux plaques tubulaires de passage des crayons qui sont propres au boîtier, l'une le terminant et l'autre constituant une bride de positionnement sur ladite plaque de cœur.

Les tubes à l'extrémité inférieure des boîtiers sont de préférence dépourvus d'ouverture latérale sur toute leur longueur entre les deux plaques tubulaires. Ils sont de ce fait plus résistants pour une moindre épaisseur. D'autre part, on évite ainsi de faire intervenir sur les crayons à ce niveau un gradient de pression horizontal qui favoriserait leur frottement contre la face interne des tubes et leur usure. Et cependant, le fluide de refroidissement primaire quittant le cœur à travers la plaque de cœur circule librement dans le volume inoccupé par les tubes et entre les boîtiers, beaucoup plus librement que dans les dispositifs utilisés antérieurement. Les boîtiers eux-mêmes n'ont donc pas à être traversés par un débit notable de fluide primaire, de sorte qu'ils sont avantageusement percés seulement d'ouvertures d'équipression qui ne détruisent pas leur robustesse. Globalement, les pertes de charge dues au dispositif de guidage des grappes de contrôle sont relativement faibles.

Pour éviter de favoriser une circulation ascendante dans les boîtiers, il est avantageux que les plaques tubulaires terminant les boîtiers ne comportent pratiquement pas d'autres ouvertures que celles qui permettent le passage des crayons absorbants dans les tubes de guidage. A l'inverse des plaques intermédiaires de guidage discontinu situées à l'intérieur de chaque boîtier, la plaque terminale ne laisse pas passer l'araignée. Par contre, les brides de positionnement sur la plaque de cœur sont percées avantageusement de larges ouvertures en dehors des tubes.

On décrira maintenant plus en détail un mode de réalisation particulier d'un réacteur à guidage de grappes de contrôle suivant l'invention, choisi à titre d'exemple. Cette description fait référence aux figures 1 à 6 dans lesquelles:

La figure 1 représente une coupe verticale générale de la partie supérieure du réacteur;

La figure 2 représente d'une manière plus détaillée le dispositif de guidage des grappes de contrôle, en coupe longitudinale, donc verticale;

La figure 3 est une coupe transversale de ce dispositif selon III-III de la figure 2;

La figure 4 est une autre coupe transversale du même dispositif, selon IV-IV de la figure 2;

La figure 5 est encore une autre coupe transversale de même dispositif, selon V-V de la figure 2; et

La figure 6 représente une variante du dispositif de guidage.

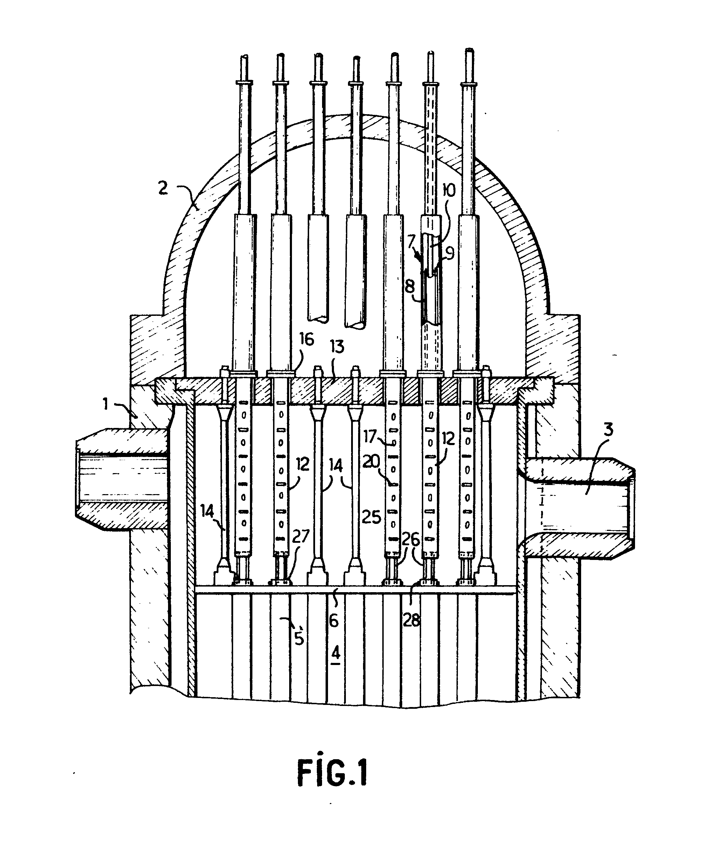

Le réacteur considéré est un réacteur du type à eau légère, dans lequel le cœur du réacteur est enfermé dans une cuve contenant la pression et traversé par de l'eau de refroidissement le parcourant dans le sens ascendant. Comme l'invention concerne la réalisation du guidage des grappes de contrôle de la réactivité, au-dessus du cœur, on n'a représenté sur la figure 1 que la partie supérieure du réacteur. On y voit cependant, en partie, le cœur 4 et la cuve 1, avec son couvercle 2 et, latéralement, l'une des tubulures de sortie de l'eau 3.

Le cœur est constitué comme il est usuel d'un ensemble d'assemblages combustibles 5 juxtaposés, chacun formé d'un nombre important de crayons verticaux de matériau combustible. La limite supérieure du cœur, juste au-dessus des assemblages combustibles, est définie par une plaque de cœur 6. Le réglage de la réactivité en fonctionnement est assuré en introduisant plus ou moins des grappes de contrôle dans certains des assemblages du cœur. Ces grappes de contrôle 7 sont constituées chacune de plusieurs crayons 8, en matériau absorbant, reliés ensemble à leur extrémité supérieure par une araignée 9 à bras radiaux, solidaire d'une tige de commande 10. Les grappes sont manœuvrées depuis l'extérieur de la cuve de manière à déplacer les crayons absorbants longitudinalement entre les crayons combustibles de l'assemblage corres-

pondant. La plaque de cœur 6 est percée d'ouvertures permettant d'une par le passage des crayons absorbants pénétrant dans le cœur, d'autre part la sortie de l'eau de refroidissement qui quitte le cœur pour se diriger ensuite vers les tubulures 3, qui sont situées à un niveau supérieur à celui de la plaque de cœur 6.

Au-dessus du cœur, les déplacements des grappes de contrôle sont guidés par des boîtiers parallélépipédiques 12, suspendus en position verticale à une plaque support supérieure 13 qui reporte le poids de l'ensemble du dispositif de guidage des grappes de contrôle sur la cuve 1. En dehors des boîtiers 12, la plaque de cœur 6 et la plaque support supérieure 13 sont reliées entre elles par des colonnes 14.

Chaque boîtier 12 entoure l'ensemble des crayons de la grappe de contrôle dont il assure le guidage. Il traverse la plaque support supérieure 13 dans un alésage ménagé à cet effet et il est fixé sur elle par une bride boulonnée 16. Il est percé latéralement de trous 17 répartis sur toute sa hauteur, qui ont pour rôle d'assurer un équilibrage de pression entre l'intérieur et l'extérieur du boîtier. A différents niveaux à intervalles réguliers, des plaques de guidage intermédiaires 18 sont montées en travers du boîtier. Chacune s'engage sur les quatre faces du boîtier à travers des lumières 20 pratiquées dans la paroi du boîtier; elle est soudée au boîtier le long de ces lumières. Les plaques intermédiaires 18 assurent à l'intérieur du boîtier un guidage des différents éléments de la grappe de contrôle, qui est discontinu sur la hauteur du dispositif. Elles comportent à cet effet (figure 3) des trous circulaires 21 pour le passage des crayons absorbants individuels, et d'autre part des fentes radiales 22 reliant les trous 21 entre eux et à une large ouverture centrale 23, ce qui permet aussi le passage et le guidage de l'araignée et de la tige de commande.

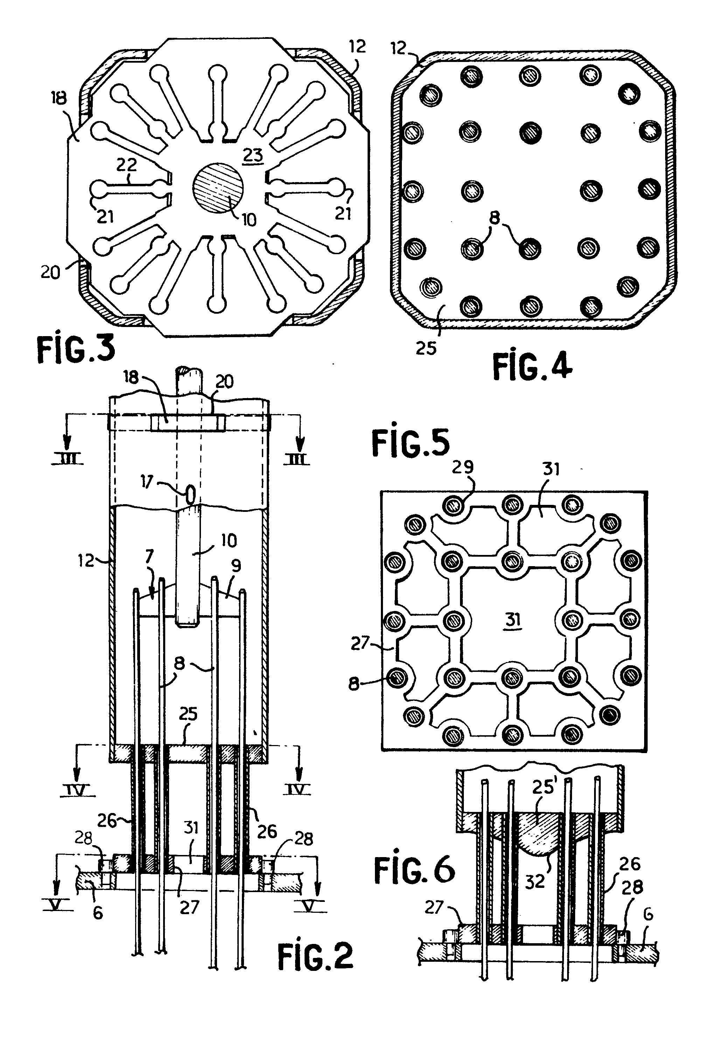

Il n'en est pas de même de la plaque terminale 25 soudée à l'extrémité inférieure du boîtier. Celle-ci est une plaque tubulaire comportant seulement des trous pour le passage des crayons absorbants (figure 4). L'araignée ne peut donc pas descendre au-delà de la plaque terminale 25, laquelle se situe à une distance de l'ordre, par exemple, de 200 mm au-dessus de la plaque de cœur 6. Sur cette distance, le guidage des crayons absorbants est encore assuré individuellement, mais, en outre, de manière continue. A cette fin, il est prévu à l'extrémité inférieure du boîtier un groupe de tubes 26 qui couvrent cette distance.

Les tubes 26 présentent un diamètre interne qui correspond au jeu près au diamètre extérieur des crayons et ils sont disposés pour être traversés longitudinalement par les différents crayons absorbants respectivement. Ils sont soudés et dudgeonnés, à leur extrémité supérieure, à la plaque terminale 25, et à leur extrémité inférieure à une autre plaque tubulaire 27. Cette dernière est en fait une bride de positionnement de l'ensemble du boîtier avec son groupe de tubes sur la plaque de cœur 6. Le positionnement est assuré, sans fixation rigide, par des pions centreurs 28 qui sont enfichés dans la plaque de cœur et entre lesquels se place le boîtier. La bride 27 (figure 5) ne comporte pas seulement les trous 29 qui correspondent aux tubes de guidage des crayons individuels. En outre, des ouvertures 31 sont ménagées en vis-à-vis des ouvertures de la plaque de cœur, de manière à laisser passer l'eau de refroidissement qui sort du cœur.

Dans toute la zone occupée par les tubes 26, l'eau circule ensuite librement entre les tubes. Il n'y a pas de communication transversale entre l'intérieur et l'extérieur des tubes. C'est dans cette zone que se produit le changement de direction de l'écoulement, vers les tubulures 3 de sortie de la cuve. Mais la perte de charge introduite par le dispositif de guidage des grappes de contrôle est minime et, d'autre part, la conception de ce dispositif permet sans difficulté une construction de grande résistance mécanique, supportant les efforts dus à la turbulence.

La figure 6 représente une variante de réalisation de la plaque supérieure du dispositif de guidage. Dans le but de favoriser une meilleure distribution au changement de direction de l'écoulement, la plaque 25' peut être constituée d'une pièce monolithique dont la surface intérieure 32 présente un profil ogival. Ce profil peut être du type conique ou conique divergent. La plaque 25' n'est pas spécialement monolithique mais peut être constituée au contraire par un ensemble plaque plane, plaque en forme. Pour le reste, la réalisation est identique à celle de la figure 2.

Naturellement, l'invention n'est nullement limitée aux détails de construction décrits dans le cadre de l'exemple de réalisation ci-dessus. Ainsi, en particulier, des ensembles analogues de boîtiers à tubes pourraient être adaptés pour guider les crayons d'une grappe de contrôle recouvrant à elle seule plusieurs assemblages combustibles du cœur.

## Revendications

1. Réacteur nucléaire comportant des grappes de contrôle de la réactivité, chacune formée d'une pluralité de crayons absorbants (8) mobiles verticalement à travers une plaque de cœur (6) constituant la limite supérieure du cœur du réacteur et reliés ensemble par une araignée (7) à bras radiaux à une tige axiale de commande commune (10), et des moyens de guidage des grappes de contrôle dans leurs déplacements, hors du cœur, lesdits moyens comportant des boîtiers de guidage (12) respectivement associés aux différentes grappes de contrôle et, à l'intérieur de chaque boîtier, des plaques (20) assurant un guidage discontinu à des niveaux intermédiaires pour les crayons individuels et l'araignée, chaque boîtier (12) étant associé à des tubes (26) de guidage continu des crayons individuels, caractérisé en ce que les tubes (26) relient deux plaques tubulaires de passage des crayons qui sont propres au boîtier, l'une (25) le terminant et l'autre constituant une bride de positionnement (27) sur ladite plaque de cœur.

2. Réacteur suivant la revendication 1, caractérisé en ce que lesdits tubes (26) sont dépourvus d'ouvertures latérales.

3. Réacteur suivant la revendication 1 ou 2, caractérisé en ce que ladite plaque tubulaire (25) terminant le boîtier ne comporte pas d'autres ouvertures que celles qui permettent le passage des crayons absorbants (8) eux-mêmes dans lesdits tubes de guidage continu (26).

4. Réacteur suivant la revendication 1, 2 ou 3, caractérisé en ce que ladite bride de positionnement (27) comporte, en dehors des ouvertures (29) pour l'introduction des tubes (26) des ouvertures (31) de passage d'un fluide de refroidissement quittant le cœur du réacteur à travers ladite plaque de cœur.

5. Réacteur selon la revendication 1, 2, 3 ou 4, caractérisé en ce que ladite plaque tubulaire (25) terminant le boîtier présente sur sa face inférieure un dispositif déflecteur profilé (32) favorisant la distribution du fluide de refroidissement lors de son changement de direction d'un écoulement vertical ascendant à un écoulement transversal.

## Patentansprüche

1. Kernreaktor mit Kontrollbündeln für die Reaktivität, von welchen jedes von einer Mehrzahl von absorbierenden Graphitstäben (8) gebildet ist, die vertikal quer durch eine Kernplatte (6) bewegbar sind, welches die obere Grenze des Reaktorkernes bildet und welche Stäbe untereinander mittels einer Spinne bzw. eines mehrzackigen Hakens (7) zusammengefaßt sind, die bzw. der radiale Arme auf einem gemeinsamen axialen Betätigungsschaft (10) besitzt, und mit Führungseinrichtungen für die Führung der Kontrollbündel während ihrer Verschiebung aus dem Kern heraus, wobei diese Einrichtungen Führungsgehäuse (12) besitzen, die jeweils den verschiedenen Kontrollbündeln zugeordnet sind und im Inneren jedes Gehäuses Platten (20) vorgesehen sind, welche eine diskontinuierliche Führung auf Zwischenhöhen für die einzelnen Graphitstäbe und die Spinne bilden und wobei jedes Gehäuse (12) mit kontinuierlichen Führungsrohren (26) für die einzelnen Graphitstäbe versehen ist, dadurch gekennzeichnet, daß die Rohre (26) zwei Rohrplatten bzw. Rohrböden zum Durchlaß der dem Gehäuse zugeordneten Graphitstäbe verbinden, wobei eine der Platten (25) das Gehäuse abschließt und die andere einen Positionierungsflansch (27) auf der Kernplatte darstellt.

2. Reaktor nach Anspruch 1, dadurch gekennzeichnet, daß die Rohre (26) frei von seitlichen Öffnungen sind.

3. Reaktor nach Anspruch 1 oder 2, dadurch gekennzeichnet, daß die Rohrplatte bzw. der Rohrboden (25), welche(r) das Gehäuse abschließt, keine anderen Öffnungen als jene aufweist, welche den Durchlaß der absorbierenden Graphitstäbe (8) selbst in den kontinuierlichen Führungsrohren (26) zulassen.

4. Reaktor nach Anspruch 1, 2 oder 3, dadurch gekennzeichnet, daß der Positionierungsflansch (27) außerhalb der Öffnungen (29) für das Einführen der Rohre (26) Durchlaßöffnungen (31) für ein Kühlungsfluid aufweist, welches aus dem Kern des Reaktors durch die Kernplatte austritt.

5. Reaktor nach einem der Ansprüche 1, 2, 3 oder 4, dadurch gekennzeichnet, daß die Rohrplatte bzw. der Rohrboden (25), welche(r) das Gehäuse abschließt, an ihrer (seiner) unteren Fläche mit einer ein Profil aufweisenden Ablenkungseinrichtung versehen ist, welche die Verteilung des Kühlungsfluids bei dessen Richtungsänderung von einer vertikal aufsteigenden Strömung in eine Querströmung erleichtert.

## Claims

1. Nuclear reactor incorporating reactivity control clusters, each consisting of a plurality of absorbent rods (8) movable vertically through a core plate (6) forming the supper boundary of the reactor core and joined together by a spider (7) with radial arms to a common axial control shaft (10), and means for guiding the control clusters in their movements out of the core, the said means comprising guidance casings (12) associated respectively with various control clusters and, inside each casing, plates (20) providing a non-continuous guidance to the individual rods and the spider, at intermediate levels, each casing (12) being associated with tubes (26) for continuous guidance of the individual rods, characterised in that the tubes (26) connect two tube plates for the passage of the rods which are adapted to the casing, one (25) forming its end and the other forming a flange for positioning (27) of the said core plate.

2. Reactor according to Claim 1, characterised in that the said tubes (26) are free from side openings.

3. Reactor according to Claim 1 or 2, characterised in that the said tube plate (25) forming an end of the casing has no openings other than those permitting the passage of absorbent rods (8), the latter themselves being in the said continuous guidance tubes (26).

4. Reactor according to Claim 1, 2 or 3, characterised in that the said positioning flange (27) incorporates, in addition to the openings (29) for the entry of the tubes (26), openings (31) for the passage of a coolant fluid leaving the reactor core through the said core plate.

5. Reactor according to Claim 1, 2, 3 or 4, characterised in that the said tube plate (25) forming an end of the casing has on its lower face a shaped deflector device (32) promoting the distribution of the coolant fluid during its change of direction from a vertical rising flow to a transverse flow.

FİG.1

FIG.3

FIG.4

FIG.5

FIG.2

FIG.6